# EUROPEAN PATENT SPECIFICATION

(11) **EP 0 583 739 B1**
(45) Date of publication and mention of the grant of the patent: **17.09.1997**
(21) Application number: 93112924.1
(22) Date of filing: 12.08.1993
(51) Int. Cl.: A23G 7/00, A23G 3/02, A23G 3/20

(54) **A device for turning moulds over, for example, for lines for processing food products**
Umkehrvorrichtung für Formen, zum Beispiel für Fabrikationsstrasse von Nahrungsmitteln
Dispositif de retournement de moules par exemple pour les chaines de fabrication de produits alimentaires

(30) Priority: 19.08.1992 CH 2585/92
(43) Date of publication of application: 23.02.1994
(73) Proprietor: SOREMARTEC S.A., 6700 Arlon-Schoppach (BE); Ferrero S.p.A., I-12051 Alba (Cuneo) (IT); Ferrero oHG mbH, D-60599 Frankfurt (DE)
(72) Inventor: Ferrero, Pietro, B-1640 Rhode St. Genese (BE)
(74) Representative: Bosotti, Luciano

(56) References cited:
- EP-A- 0 083 324
- EP-A- 0 156 340
- DE-C- 401 932
- US-A- 4 530 214
- DATABASE WPI Derwent Publications Ltd., London, GB; AN 89-030651 KUTOVOI S. V. ET AL. & SU-A-1 407 991 7 July 1988
- DATABASE WPI Derwent Publications Ltd., London, GB; AN 89-291550 PODUZDIKOV A. V. ET AL. & SU-A-1 447 566 30 December 1988

## Description

The present invention relates to devices for turning moulds over and specifically relates to a device for imparting a turning movement about a predetermined axis to generally flat moulds. The invention has been developed with particular attention to its possible use, for example, in lines for the production and handling of products such as food products, for example, confectionery products.

For instance from EP-A-0 156 340 a device is known for imparting a turning movement to generally flat moulds including two annular structures through which the mould advance to be turned over, thereby orienting downwardly the products contained therein, to be downloaded onto an output conveyor. The moulds are subsequently turned back to their starting position by the annular structure located downwardly.

In the same context, it is quite common to use moulds each constituted by two complementary elements (or half-moulds). For example, European patent application EP-A-0 083 324 describes a mould of this type which can be used to produce food products constituted by spherical wafer shells containing masses of pasty or creamy filling. In practice, the two half-moulds are constituted by flat plates with holes or cells for housing hemispherical wafer shells. The mass of filling is inserted in the wafer shells which are in the moulds (typically by pouring) and the two half-moulds are then brought together so that they are precisely superposed and bear against each other frontally, thus fitting the filled half-shells in the half-moulds together frontally. This encourages the (half-) masses of filling to join together consequently forming a spherical wafer shell containing the mass of filling, as the final product. This result is achieved by turning one of the half-moulds (the male half-mould) over onto the other half-mould (the female half-mould) in a generally hinged arrangement. The male half-mould is then raised, leaving the completed products in the female half-mould from which the products are then removed for subsequent handling operations (coating or covering, packaging, etc.). Naturally, the same solution may also be used in relation to different products, for example, hollow and/or filled chocolate shells or eggs.

The turning-over of the moulds (both in the sense in which the male half-mould is fitted onto the female half-mould and in the sense in which the male half-mould is removed and raised) can undoubtedly create practical problems. In particular, this is due to the fact that the half-moulds are sent to the closure turning station and to the opening turning station on conveyor lines which entrain the moulds positively, typically by engaging the moulds with formations such as grippers, teeth, dogs, etc. In practice, in order to bring about the turning operation (both for closing and for opening the mould) it is usually necessary:
- to stop the movement of the mould at the turning station,
- to release the mould from the members which entrain it along the conveyor line, and
- to engage the mould (or at least one of the two half-moulds) with gripping members which can lift it in order to turn it over.

The same problems also arise and are often made even more critical, if it is envisaged to "follow" the moulds during the turning or in order to turn them.

Naturally, during all this the mould must remain precisely located in space and time, particularly as regards the imperative need to ensure that the two half-moulds are fitted together in precisely superposed conditions during the closure movement.

In this connection, reference may usefully be made to European patent application EP-A-0 083 324 already mentioned above, which describes a turning system comprising gripping or jaw formations which can grip one or both the half-moulds during the turning operation.

There is therefore a need to provide a turning device which, whilst satisfying in an optimal manner the requirements for the precise and safe movement inherent in correct operation, radically overcomes the problems described above, particularly as regards its possible combination with conveyor lines on which the moulds are no longer subject to a strictly positive entrainment action.

The object of the present invention is therefore to respond to this need.

According to the present invention, this object is achieved by virtue of a turning device having the specific characteristics recited in Claim 1. Advantageous developments of the invention form the subjects of the subclaims which follow.

The invention will now be described, purely by way of non-limiting example, with reference to the appended drawings, in which:
Figure 1 is a general perspective view of a conveyor line for moulds associated with a turning device according to the invention,
Figure 2 is a side elevational view of a turning device for moulds according to the invention, and
Figure 3 shows the characteristics of some of the elements visible in Figure 2 in greater detail.

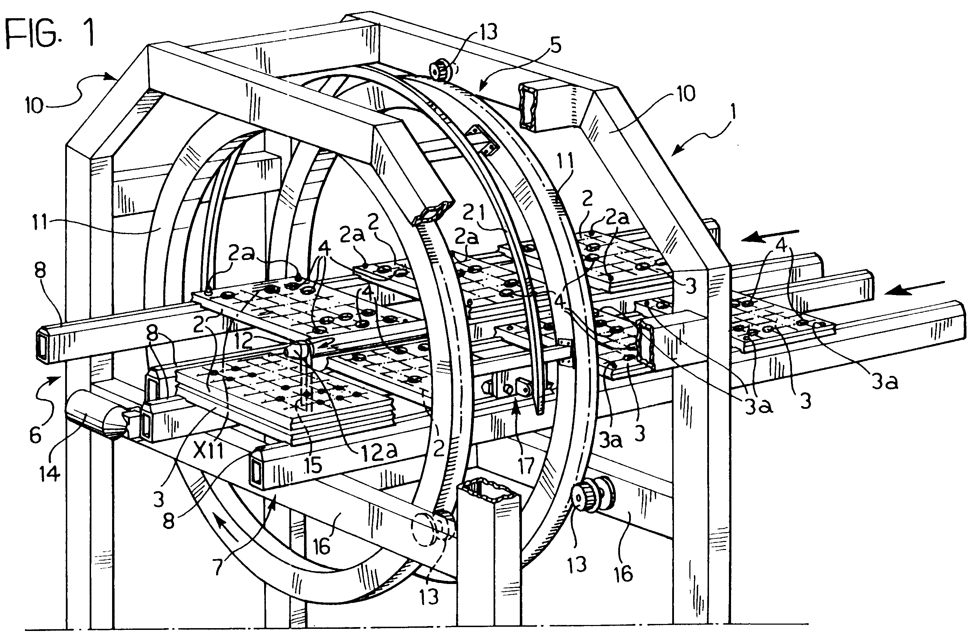

Figure 1 is a general view of a portion of a system for processing articles such as food products.

For example, this may be a system for automatically producing confectionery products constituted by spherical wafer shells containing masses of pasty or creamy filling. In other words these are products of the type described, for example, in European patent application EP-A-0 083 324. The product in question is produced with the use of two complementary moulds (or more correctly half-moulds) 2, 3 which, in practice, are constituted by flat polygonal (typically rectangular) bodies each having an array of hemispherical cavities or cells 4 in one face. The cells 4 are intended to house products such as, for example, hemispherical wafer half-shells which receive a creamy or pasty mass of chocolate- or dried fruit-flavoured filling in a filling station (which is not shown in the drawings but may be presumed to be disposed upstream of the portion of the system shown in Figure 1, in which the moulds 2, 3 advance from right to left). Alternatively, the cells 4 could house products such as hollow or filled chocolate shells or chocolate eggs, etc.

The portion of the system shown in Figure 1 is the portion in which the half-moulds 2, 3 containing the products are brought together. In particular, the half-moulds 2, 3 advance initially on two paired conveyor lines side by side and, in these conditions, reach the turning device 5 which will be described in detail below. In the device 5, the half-moulds 2 are turned over onto the half-moulds 3, so that the half-products within them are fitted together frontally in order to produce the finished products P as a result of the bringing-together of the half-moulds. Male formations 2a on the front faces of the half-moulds 2 enter corresponding holes 3a in the front faces of the half-moulds 3 to ensure that the half-moulds 2, 3 are superposed in precise alignment.

Another turning device (substantially identical to that indicated 5) is generally provided downstream of the portion of the system shown, for lifting the moulds 2 again, turning them over until they are returned to their positions beside the half-moulds 3 which contain the finished products P.

In any case, regardless of its function and sense of movement, the further turning device (not shown in the drawings) is almost identical to that which will be described in detail below.

It will be appreciated that both the conveyor lines, indicated 6 and 7, respectively, for transporting the half-moulds 2 and 3 are so-called restraint-free mould lines, that is, lines on which, instead of being subject to positive entrainment, the moulds 2 and 3 are simply supported on the upper passes of movable conveyor formations 8 constituted by motor-driven belts, for example, belts with rectangular profiles. This is in accordance with criteria described in greater detail in a patent application filed by the Applicant on the same date.

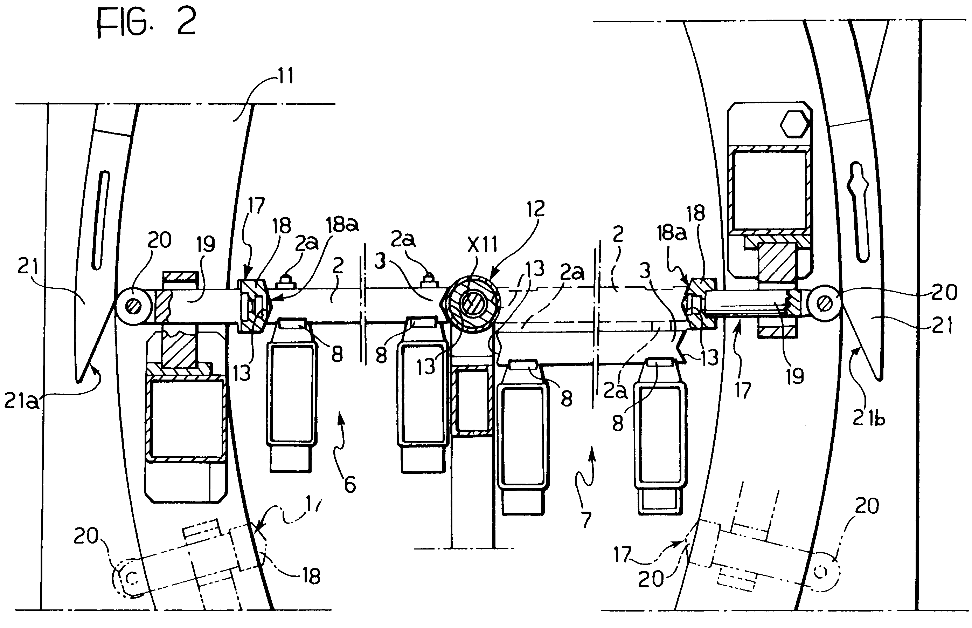

To proceed to a detailed description of the structure of the turning device 5, it can be noted that it comprises a framework 10 disposed in a generally portal-like configuration above the path of movement of the moulds 2 and 3 defined by the conveyor lines 6 and 7. In practice (see the side elevational view of Figure 2, in particular), the moulds in question advance on the respective lines 6 and 7 in an almost diametral direction relative to two ring-like bodies 11 which are supported on the framework 10 for rotation about a horizontal axis X11 disposed between the paths of advance of the moulds 2 and 3. In practice, the axis X11 coincides both with the (common) axis of the two ring-like bodies 11 and with the axis of rotation of a shaft 12 mounted in a central position relative to the two ring-like bodies 11.

In greater detail, it can be seen that the ring-like bodies 11 are supported for rotation about the axis X11 on revolving bodies such as rollers or pulleys 13 rotatable about respective horizontal shafts supported by the framework 10.

In the embodiment illustrated, for each ring 11 there are at least three pulleys or rollers 13 of which at least one carries an associated motor 14 (for example, an electric motor) which rotates the respective ring 11 selectively about the axis X11.

With reference to the shaft 12, it can be noted that it is supported in a central position and in a horizontal orientation by a framework 15 which extends upwards and inwardly of the rings 11 from one, or better, two strong cross members 16 disposed in the lower portion of the framework 10.

In general (for reasons which will become clearer from the following), the shaft 12 (which is supported on the respective support structure 15 by bearings which enable it to rotate about the axis X11 easily without appreciable friction) is not completely cylindrical but, on the contrary, is shaped generally like a spindle or bobbin with generally tapered ends 12a.

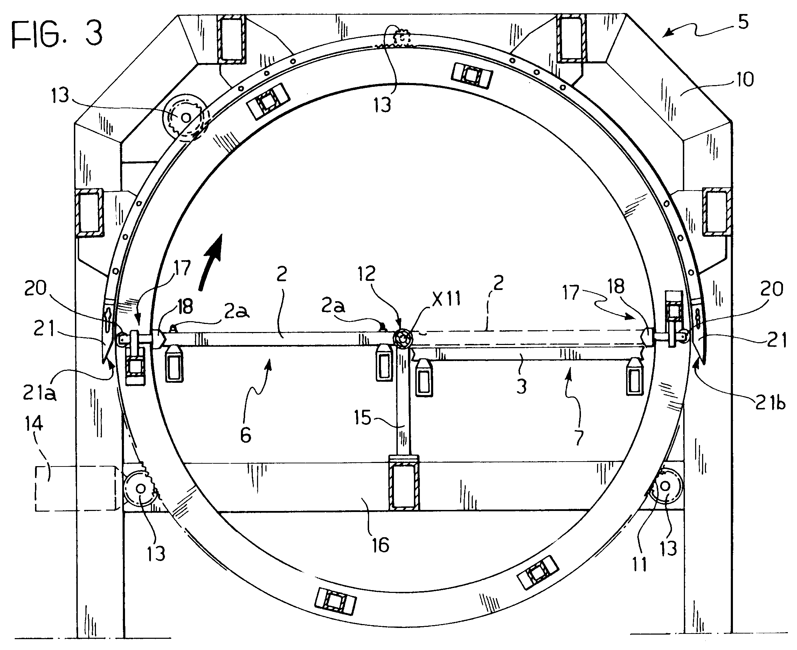

It will be noted (see in particular, the elevational view of Figure 3) that the sides of the half-moulds 2 and 3 (more precisely, the vertical sides oriented along the general direction of advance of the half-moulds) are not smooth but have a generally recessed shape, having horizontal lateral grooves 13 with substantially V-shaped profiles.

This means that the sides of the half-moulds 2 and 3 can be brought to bear against the sides of the shaft 12 so as to surround it, at least partially.

It will also be noted that the two conveyor lines 6 and 7 on which the half-moulds 2 and 3 advance are not positioned at exactly the same height.

More precisely, the upper passes of the belts 8 on which the half-moulds 2 advance are in slightly raised positions relative to the upper passes of the belts 8 on which the half-moulds 3 advance.

In particular, the heights of the upper passes of the belts 8 of the line 6 are selected in coordination with the overall depths of the half-moulds 2, in a manner such that the half-moulds 2, which are kept horizontal, (and, more precisely, the bottoms of the grooves 13 along their sides) are at the same height as the axis X11.

The heights of the upper passes of the belts 8 of the conveyor line 7, on the other hand, are selected in a manner such that the half-moulds 3 are kept generally below the axis X11 by a distance (measured vertically) corresponding approximately to the depths of the half-moulds 2, 3.

In practice, this means that, when one of the half-moulds 2 is turned over onto a corresponding half-mould 3 (according to criteria which will be described further below), the lower half-mould 3 does not interfere with the turning movement.

Two gripping members, indicated 17, are mounted on the rings 11, in diametrally-opposed positions.

As can better be seen in the detailed view of Figure 3, each gripping member 17 comprises a wedge-shaped head portion 18 having a front face 18a of a generally triangular shape complementary to those of the grooves 13 in the sides of the moulds 2 and 3.

The head portion 18, which projects inwardly of the respective ring 11, is mounted on a device 19 which can slide generally radially relative to the ring 11 under the action exerted on the opposite end of the element 19 to the head 18 by a roller 20. The roller 20 is mounted for rotating about a horizontal axis on the body 19 and can cooperate like a follower with a cam 21 mounted in a fixed position on the framework 10, in a position facing the ring 11 (see also the general perspective view of Figure 1).

In particular, the cam 21, which is generally semicircular, has a first face or slope 21a disposed at about the same height as the shaft 12. The slope 21a is shaped in a manner such that, whereas below the slope 21a the element 19 (and hence the gripping member 17 as a whole) can move away outwardly of the ring 11, for example, bringing the head portion 18 into contact with an abutment on the ring 11 (the condition, shown in chain line in the lower left-hand portion of Figure 3), as soon as the gripping member 17 reaches the slope 21a, the roller 20 cooperates with the slope 21a like a cam-follower and urges the member 17 inwardly of the ring 11. As a result of this thrust, the head 18 advances inwardly of the ring 11 far enough for its front face 18a, which has a dihedral profile, to become wedged in the groove 13 in the side of a corresponding mould 2 (the position shown in continuous outline on the left-hand side in Figure 3). Above the slope 21a, the cam 21 has a constant profile or height so that the roller 20 can roll along the cam 21, keeping the head 18 in the position in which it projects inwardly of the ring 11. This operating condition is maintained throughout the arcuate path corresponding to the upper half-circles of the rings 11. Diametrally opposite the slope 21a, the cam 21 has a complementary slope 21b in correspondence with which the cam-follower roller 20 can move away again outwardly of the ring 11, reaching the position shown schematically in chain line in the lower right-hand portion of Figure 3.

The structure just described can be used either to close or to open the moulds (the half-moulds 2 and 3) (according to the sense of rotation).

The half-moulds 2, 3 are closed from an arrangement in which the two half-moulds travel approximately in pairs (Figure 1). The half-mould 2 is then gripped by the member 17 and forced against the shaft 12, and its outer side (relative to the axis X11) is raised until it is turned over onto the corresponding half-mould 3 (see the broken outline in Figure 2), so that the cavities or cells 4 in the half-moulds and the half-products therein are fitted together frontally.

The opening movement of the moulds is brought about in a complementary manner, thus starting from the position in which a half-mould 2 is coupled with and fitted on top of a half-mould 3, the half-mould 2 then being turned over to bring it back to a position beside the half-mould 3, in which the finished products produced previously as a result of the closure of the mould are usually left.

With reference to the arrangement shown in Figures 2 and 3, the moulds are closed by causing (by means of the motor 14) the rings 11 to rotate clockwise.

Thus, starting from a position in which it is retracted generally outwardly of the respective ring (the condition shown in chain line in the left-hand portion of Figure 2), the gripping member 17 is urged, as a result of the cooperation of the respective cam-follower roller 20 with the slope 21a of the cam 22 (which acts as a rising face) to the position in which it projects inwardly of the ring 11, and in which the dihedral portion 18a of the head portion 18 engages the groove 13 in the side of the half-mould 2 which is in the device 5 at that moment. This projection of the member 17 inwardly of the ring 11 forces the half-mould 2 to bear firmly against the shaft 12 which is in a central position relative to the rings 11. At this point, as its upward rotary movement continues as a result of the clockwise rotation of the rings 11, the element 17 entrains the half-mould 2 with it, raising it until it reaches a vertical position in the vertical diametral plane of the rings 11 and then gradually lowering until it lies on the corresponding half-mould 3 (the position shown in broken outline in Figure 2).

When this position has been reached (it should be remembered that the half-mould 3 does not interfere with the turning movement since it is in a position at least slightly lower than the shaft 12), the member 17 leaves the half-mould 2 which has been turned over, moving outwardly of the ring again. The disengagement of the roller 20 from the cam 1, which takes place gradually in correspondence with the slope 21b which acts as a descending face, enables the member 17 to be retracted relative to the rings 11. At this point, the element 17 has returned to the position in which it is retracted outwardly of the ring (the condition shown in chain line in the right-hand portion of Figure 2) and thus continues on the path imparted to it as a result of the rotation of the rings 11 until it is brought back beneath the slope 21a of the cam so that it can engage another half-mould 2 which, in the meantime, has advanced to the turning device 5 on the line 6.

Preferably, and according to the embodiment to which Figure 2 relates specifically, it is envisaged that there will be at least two diametrally opposed members 17 on the same ring 11.

Thus, when one member 17 leaves (in correspondence with the side 21b) a respective half-mould 2 which has just completed its turning travel, the diametrally opposite member 17 is ready to be projected inwardly of the rings 11 in correspondence with the side 21a of the cam so as to receive another half-mould 2 to be turned over onto the corresponding half-mould 3.

The speed of rotation of the rings 11 can thus be reduced for a given mould-turning rate: in fact, the rings can turn over two half-moulds for each rotation about the axis X11.

The opposite operation (that is, the opening of the moulds by the lifting of a half-mould 2 which has been turned over onto a corresponding half-mould 3 until it is returned to a position beside the complementary half-mould again) is brought about in a manner corresponding completely to that described above with the sole difference that, in this case, the rings 11 are rotated in the opposite sense, that is, anti-clockwise instead of clockwise (with reference to Figures 2 and 3).

In this case, starting from the position shown in broken outline in the drawings, a member 17 approaches the slope 21b (which, in this case, acts as the rising face) of the cam 21 from below in order to be projected inwardly of the rings 11 so that it engages the half-mould 2 to be turned over and opened, as a result of the dihedral front portion 18a entering the lateral groove 13. When this engagement condition has been reached, the outer side of the half-mould 2 is gradually raised relative to the axis X11, disengaging the male appendages 2a from the corresponding holes 3a in the half-mould 3, as a result of the rotary movement of the rings 11 (anti-clockwise in this case). The half-mould 2 which is raised to the vertical position is then returned to the horizontal position, again as a result of the rotation of the rings 11. When this position has been reached, the gripping member 17 which has reached the slope 21a (which in this case acts as the descending face of the cam 21) can be projected outwardly of the ring 11 again, releasing the half-mould 2 which has returned to a position beside the corresponding half-mould 3.

In this case the presence of two diametrally-opposed gripping members 17 also enables each revolution of the rings 11 to turn over and open two half-moulds. In fact, when a member 17 has completed its turning travel in correspondence with the face 21a of the cam 21 and continues downwards releasing the half-mould 2 which has just been turned over, the member 17 in a diametrally-opposed position engages the next half-mould 2 and then proceeds to turn it over.

As can best be seen in the perspective view of Figure 1, it is considered preferable for each turning device 5 to comprise two rings 11 side by side. This is in order to be able to have gripping members 17 which are either disposed in pairs side by side (one for each ring) or which extend for a certain axial distance between the two rings 11 (as in the embodiment shown) so that, in any case, they can exert their action over a certain length of the mould 2: clearly, this is to keep firm control of the moulds during both the closure and the opening turning movements.

As mentioned above, the central shaft 12 is not usually strictly cylindrical but is generally spindle-shaped with tapered ends 12a.

The reason for this shape is that, as can be appreciated from the elevational views of Figures 2 and 3, the moulds 2 are intended to be brought into correspondence with the shaft 12 as a result of the forward movement imparted thereto by the conveyor lines 6 (closure turning) or 7 (opening turning) and hence with a movement parallel to the direction of axis X11.

The presence of the tapered ends 12a (or even of a single tapered end facing the side of the shaft from which the moulds 2 advance towards the turning device 5) is intended to prevent the moulds 2 from accidentally jamming against the shaft 12 as they move alongside it.

Moreover, the generally tapered shape of the end 12a acts as a kind of lead-in which facilitates the precise alignment of the moulds 2 in the positions in which they are intended to be engaged by the gripping members 17 in order to be forced against the shaft 12.

Naturally, the principle of the invention remaining the same, the details of construction and forms of embodiment may be varied widely with respect to those illustrated, without thereby departing from the scope of the claims. In particular, whilst retaining the fundamental concept upon which the operation of the turning device 5 just described is based, that is, that of turning the moulds over by forcing them, for example, to bear on one side against a reaction or abutment formation (represented by the shaft 12) by gripping means (the member 17) which can engage, for example, another side of the mould and perform a generally orbital movement about the reaction means, the structural characteristics of the reaction element, of the gripping means, and of the elements which control the gripping of the moulds 2 and the orbital movement of the means may be varied widely without departing from the scope of the claims.

## Claims

1. A device for imparting a turning movement about a predetermined axis (X11) to generally flat moulds (2), comprising
- reaction means (12) extending along the turning axis (X11), and
- gripping means (17) which can engage the moulds (2), forcing them against the reaction means (12), and which can perform a general orbital movement (11) about the turning axis (X11) so as to impart the turning movement to the moulds (2).

2. A device according to Claim 1, characterized in that it further comprises moulds (2) which are generally polygonal with two generally parallel sides (13) of which one is intended to bear against the reaction means (12) during the turning and the other is intended to be engaged by the gripping means (17).

3. A device according to Claim 1 or Claim 2, characterized in that the reaction means are constituted essentially by a shaft (12) rotatable about the turning axis (X11).

4. A device according to Claim 2 characterized in that each mould (2) has a first side with a generally recessed profile (13) which can cooperate with and bear against the reaction means (12) during the turning movement.

5. A device according to any of Claims 2 or 4, characterized in that each mould (2) has a further side (13) with a generally recessed profile which can be engaged by the gripping means (17) during the turning movement.

6. A device according to Claim 4 or Claim 5, characterized in that the said one side (13) has a generally V-shaped profile.

7. A device according to Claim 5, characterized in that the further side (13) of each mould (2) has a generally V-shaped profile.

8. A device according to any one of the preceding claims, characterized in that it comprises conveyor means (6, 7) for bringing the moulds (2) into correspondence with the reaction means (12) as a result of a movement in the direction of the turning axis (X11) and in that the reaction means (12) have at least one generally tapered end (12a) pointing towards the moulds (2) which are moving towards the reaction means (12).

9. A device according to any one of the preceding claims, characterized in that the gripping means (17) can perform (19) a general movement away from and towards the turning axis (X11).

10. A device according to Claim 9, characterized in that the gripping means (17) carry associated operating means (19, 20, 21) which can bring about selectively:
- a movement of the gripping means (17) towards the turning axis (X11) in order to bring the gripping means (17) into engagement with one of the moulds (2) to be turned about the axis (X11) and to force it against the reaction means, and
- a movement of the gripping means (17) away from the turning axis (X11) in order to release one of the moulds (2) upon completion of the turning movement.

11. A device according to Claim 10, characterized in that the operating means (19, 20, 21) comprise at least one cam (21) which cooperates with the gripping elements (17).

12. A device according to Claim 11, characterized in that the gripping means (17) comprise at least one revolving body (20) for cooperating with the at least one cam (21) in a generally following relationship.

13. A device according to any one of the preceding claims, characterized in that it comprises at least one rotary structure (11) which is centered on the turning axis (X11) and on which the gripping means (17) are mounted; the rotation of the at least one rotary structure (11) causing the orbital movement of the gripping means (17) about the turning axis (X11).

14. A device according to Claim 1 or Claim 13, characterized in that it comprises drive means (14) which can be activated selectively in two senses of rotation in order to impart orbital movements in opposite senses about the turning axis (X11) to the gripping means (17) in order selectively to bring about, according to the sense of rotation:
- a closure turning movement which brings a respective mould (2) to cover a respective complementary mould (3); and
- an opening turning movement which brings a respective mould (2) which is in the covering position on a respective complementary mould (3) to a position generally beside the respective mould (3).

15. A device according to Claim 4 and Claim 13, characterized in that the drive means (14) act on the at least one rotary structure (11).

16. A device according to Claim 13 or Claim 15, characterized in that the at least one rotary structure (11) is generally annular.

17. A device according to Claim 16, characterized in that the annular rotary structure (11) is rotatable about the turning axis (X11) and is supported rotatably on a plurality of revolving bodies (13).

18. A device according to Claim 14 and Claim 17, characterized in that the drive means (14) are associated with at least one of the revolving bodies (13).

19. A device according to Claim 11 and Claim 16, characterized in that the at least one cam (21) is generally semicircular and extends along approximately half the path of rotation of the at least one annular rotary structure (11) with rising and descending slopes (21a, 21b) respectively located in diametrally-opposed positions for cooperating with the gripping means (17).

20. A device according to any one of the preceding claims, characterized in that it comprises at least two gripping means (17) disposed in diametrally-opposed positions along the orbital path of the gripping means (17) about the turning axis (X11); the arrangement being such that, when one of the gripping means (17) engages a respective mould (2) in order to start its turning movement about the turning axis (X11), the other gripping means (17) is leaving another mould (2) which has completed its turning movement about the turning axis (X11).

21. A device according to any one of the preceding claims, characterized in that it comprises at least two rotary structures (11) disposed side by side for entraining the gripping means (17).

22. A device according to Claim 14, characterized in that it comprises a first line (6) and a second line (7) for conveying the moulds (2, 3), the lines (6, 7) being intended, respectively:
- for supplying to the reaction means (12) the moulds (2) which are to be closed so as to cover the respective complementary moulds (3), and for receiving the moulds (2) which have been turned over and opened from initial positions in which the moulds (2) were covering the respective complementary moulds (3) to positions generally beside them, and
- for conveying the complementary moulds (3) towards the reaction means (12), for conveying from the reaction means (12) pairs of moulds (2, 3) which are superposed in a covering arrangement as a result of the closure turning movement, and for conveying to the reaction means (12) pairs of moulds (2,3) which are superposed in a covering arrangement, and of which the upper mould (2) is to be turned over in the opening movement.

23. A device according to Claim 22, characterized in that the second conveyor line (7) is in a generally lower position than the first conveyor line (6).

24. A device according to Claim 22 or Claim 23, characterized in that the conveyor lines (6, 7) comprise motor-driven entrainment formations (8) on which the moulds (2) are supported without restraint.

## Patentansprüche

1. Vorrichtung, um allgemein flachen Formen (2) eine Drehbewegung um eine vorbestimmte Achse (X11) zu verleihen, umfassend:
- Gegendruckeinrichtungen (12), die sich entlang der Drehachse (X11) erstrecken, und
- Greifeinrichtungen (17), die mit den Formen (2) in Eingriff treten können, wobei sie diese gegen die Gegendruckeinrichtungen (12) drücken, und die eine allgemeine Umlaufbewegung (11) um die Drehachse (X11) durchführen können, so daß sie den Formen (2) die Drehbewegung verleihen.

2. Vorrichtung nach Anspruch 1, dadurch gekennzeichnet, daß sie weiter Formen (2) umfaßt, die allgemein polygonal sind, mit zwei allgemein parallelen Seiten (13), von denen eine während des Drehens gegen die Gegendruckeinrichtungen (12) gedrückt werden soll und die andere mit den Greifeinrichtungen (17) in Eingriff treten soll.

3. Vorrichtung nach Anspruch 1 oder Anspruch 2, dadurch gekennzeichnet, daß die Gegendruckeinrichtungen im wesentlichen von einer um die Drehachse (X11) drehbaren Welle (12) gebildet werden.

4. Vorrichtung nach Anspruch 2, dadurch gekennzeichnet, daß jede Form (2) eine erste Seite mit einem allgemein vertieften Profil (13) aufweist, die während der Drehbewegung mit den Gegendruckeinrichtungen (12) zusammenwirken und gegen diese drücken kann.

5. Vorrichtung nach einem der Ansprüche 2 oder 4, dadurch gekennzeichnet, daß jede Form (2) eine weitere Seite (13) mit einem allgemein vertieften Profil aufweist, die während der Drehbewegung mit den Greifeinrichtungen (17) in Eingriff gebracht werden kann.

6. Vorrichtung nach Anspruch 4 oder Anspruch 5, dadurch gekennzeichnet, daß die besagte eine Seite (13) ein allgemein V-förmiges Profil aufweist.

7. Vorrichtung nach Anspruch 5, dadurch gekennzeichnet, daß
die weitere Seite (13) jeder Form (2) ein allgemein V-förmiges Profil aufweist.

8. Vorrichtung nach einem beliebigen der vorangehenden Ansprüche, dadurch gekennzeichnet, daß sie Fördereinrichtungen (6, 7) umfaßt, um die Formen (2) infolge einer Bewegung in Richtung der Drehachse (X11) mit den Gegendruckeinrichtungen (12) in Übereinstimmung zu bringen, und daß die Gegendruckeinrichtungen (12) mindestens ein allgemein verjüngtes Ende (12a) aufweisen, welches in Richtung der Formen (2) weist, die sich auf die Gegendruckeinrichtungen (12) zu bewegen.

9. Vorrichtung nach einem beliebigen der vorangehenden Ansprüche, dadurch gekennzeichnet, daß die Greifeinrichtungen (17) eine allgemeine Bewegung weg von der Drehachse (X11) und auf diese zu ausführen (19) können.

10. Vorrichtung nach Anspruch 9, dadurch gekennzeichnet, daß die Greifeinrichtungen (17) zugehörige Betätigungseinrichtungen (19, 20, 21) tragen, welche selektiv herbeiführen können:
- eine Bewegung der Greifeinrichtungen (17) in Richtung der Drehachse (X11), um die Greifeinrichtungen (17) mit einer der um die Achse (X11) zu drehenden Formen (2) in Eingriff zu bringen und sie gegen die Gegendruckeinrichtungen zu drücken, und
- eine Bewegung der Greifeinrichtungen (17) weg von der Drehachse (X11), um eine der Formen (2) bei Beendigung der Drehbewegung freizugeben.

11. Vorrichtung nach Anspruch 10, dadurch gekennzeichnet, daß die Betätigungseinrichtungen (19, 20, 21) mindestens einen mit den Greifelementen (17) zusammenwirkenden Kurventräger (21) umfassen.

12. Vorrichtung nach Anspruch 11, dadurch gekennzeichnet, daß die Greifeinrichtungen (17) mindestens einen rotierenden Körper (20) zum Zusammenwirken mit dem mindestens einen Kurventräger (21) in einer allgemeinen Folgebeziehung umfassen.

13. Vorrichtung nach einem beliebigen der vorangehenden Ansprüche, dadurch gekennzeichnet, daß sie mindestens eine Drehstruktur (11) umfaßt, die auf der Drehachse (X11) zentriert ist, und auf der die Greifeinrichtungen (17) angebracht sind; wobei die Drehung der mindestens einen Drehstruktur (11) die Umlaufbewegung der Greifeinrichtungen (17) um die Drehachse (X11) bewirkt.

14. Vorrichtung nach Anspruch 1 oder Anspruch 13, dadurch gekennzeichnet, daß sie Antriebseinrichtungen (14) umfaßt, welche selektiv in zwei Drehrichtungen aktiviert werden können, um den Greifeinrichtungen (17) Umlaufbewegungen in entgegengesetzten Richtungen um die Drehachse (X11) zu verleihen, um entsprechend der Drehrichtung selektiv herbeizuführen:
- eine Schließdrehbewegung, welche eine jeweilige Form (2) dazu bringt, eine jeweilige komplementäre Form (3) zu bedecken; und
- eine Öffnungsdrehbewegung, welche eine jeweilige Form (2), die sich in der Bedeckungsposition auf einer jeweiligen komplementären Form (3) befindet, in eine Position allgemein neben der jeweiligen Form (3) zu bringen.

15. Vorrichtung nach Anspruch 4 und Anspruch 13, dadurch gekennzeichnet, daß die Antriebseinrichtungen (14) auf die mindestens eine Drehstruktur (11) einwirken.

16. Vorrichtung nach Anspruch 13 oder Anspruch 15, dadurch gekennzeichnet, daß die mindestens eine Drehstruktur (11) allgemein ringförmig ist.

17. Vorrichtung nach Anspruch 16, dadurch gekennzeichnet, daß die ringförmige Drehstruktur (11) um die Drehachse (X11) drehbar ist und auf einer Mehrzahl von rotierenden Körpern (13) drehbar gehalten wird.

18. Vorrichtung nach Anspruch 14 und Anspruch 17, dadurch gekennzeichnet, daß die Antriebseinrichtungen (14) mit mindestens einem der rotierenden Körper (13) verbunden sind.

19. Vorrichtung nach Anspruch 11 und Anspruch 16, dadurch gekennzeichnet, daß der mindestens eine Kurventräger (21) allgemein halbkreisförmig ist und sich entlang von ungefähr der Hälfte des Drehpfades der mindestens einen ringförmigen Drehstruktur (11) erstreckt, wobei zum Zusammenwirken mit den Greifeinrichtungen (17) Anstiegs- und Abstiegsschrägen (21a, 21b) jeweils in diametral entgegengesetzten Positionen angeordnet sind.

20. Vorrichtung nach einem beliebigen der vorangehenden Ansprüche, dadurch gekennzeichnet, daß sie mindestens zwei Greifeinrichtungen (17) umfaßt, die in diametral entgegengesetzten Positionen entlang des Umlaufpfades der Greifeinrichtungen (17) um die Drehachse (X11) angeordnet sind, wobei die Anordnung derart ist, daß dann, wenn eine der Greifeinrichtungen (17) mit einer jeweiligen Form (2) in Eingriff tritt, um ihre Drehbewegung um die Drehachse (X11) einzuleiten, die andere Greifeinrichtung (17) eine andere Form (2) verläßt, welche ihre Drehbewegung um die Drehachse (X11) beendet hat.

21. Vorrichtung nach einem beliebigen der vorangehenden Ansprüche, dadurch gekennzeichnet, daß sie zum Mitnehmen der Greifeinrichtungen (17) mindestens zwei nebeneinander angeordnete Drehstrukturen (11) umfaßt.

22. Vorrichtung nach Anspruch 14, dadurch gekennzeichnet, daß sie ein erstes Fließband (6) und ein zweites Fließband (7) zum Transportieren der Formen (2, 3) umfaßt, wobei die Fließbänder (6, 7) jeweils dazu dienen sollen:
- den Gegendruckeinrichtungen (12) die Formen (2) zuzuführen, welche geschlossen werden sollen, so daß sie die jeweiligen komplementären Formen (3) bedecken, und die Formen (2) aufzunehmen, welche aus Ausgangspositionen, in denen die Formen (2) die jeweiligen komplementären Formen (3) bedeckt hatten, in Positionen allgemein neben ihnen umgedreht und geöffnet worden sind, und
- die komplementären Formen (3) in Richtung der Gegendruckeinrichtungen (12) zu transportieren, von den Gegendruckeinrichtungen (12) Paare von Formen (2, 3) wegzutransportieren, die infolge der Schließdrehbewegung in einer bedeckenden Anordnung übereinander liegen, und zu den Gegendruckeinrichtungen (12) Paare von Formen (2, 3) zu transportieren, die in einer bedeckenden Anordnung übereinander liegen und von denen die obere Form (2) bei der Öffnungsbewegung umgedreht werden soll.

23. Vorrichtung nach Anspruch 22, dadurch gekennzeichnet, daß sich das zweite Fließband (7) in einer allgemein tieferliegenden Position als das erste Fließband (6) befindet.

24. Vorrichtung nach Anspruch 22 oder Anspruch 23, dadurch gekennzeichnet, daß die Fließbänder (6, 7) motorgetriebene Mitnahmestrukturen (8) umfassen, auf denen die Formen (2) ohne Festhalten getragen werden.

## Revendications

1. Dispositif pour donner un mouvement de retournement autour d'un axe prédéterminé (X 11) à des moules généralement plats (2), comprenant :
- un moyen de réaction (12) s'étendant le long de l'axe de rotation (X11), et
- un moyen de préhension (17) qui peut engager les mornes (2), les amenant de force contre le moyen de réaction (12), et qui peut avoir un mouvement général orbital (11) autour de l'axe de rotation (X11) afin de donner le mouvement de retournement aux moules (2).

2. Dispositif selon la revendication 1, caractérisé en ce qu'il comprend, en outre, des moules (2) qui sont généralement de forme polygonale avec deux côtés généralement parallèles (13), un côté étant destiné à porter contre le moyen de réaction (12) durant le retournement et l'autre côté étant destiné à être engagé par le moyen de préhension (17).

3. Dispositif selon la revendication 1 ou la revendication 2, caractérisé en ce que le moyen de réaction est constitué principalement par un arbre (12) adapté à tourner autour de l'axe de rotation (X11).

4. Dispositif selon la revendication 2, caractérisé en ce que chaque moule (2) comporte un premier côté avec un profil généralement évidé (13) qui peut coopérer avec et porter contre le moyen de réaction (12) durant le mouvement de retournement.

5. Dispositif selon l'une quelconque des revendications 2 ou 4, caractérisé en ce que chaque moule (2) comporte un autre côté (13) avec un profil généralement évidé qui peut être engagé par le moyen de préhension (17) durant le mouvement de retournement.

6. Dispositif selon la revendication 4 ou la revendication 5, caractérisé en ce que ledit premier côté (13) a un profil généralement en forme de V.

7. Dispositif selon la revendication 5, caractérisé en ce que l'autre côté (13) de chaque moule (2) a un profit généralement en forme de V.

8. Dispositif selon l'une quelconque des revendications précédentes, caractérisé en ce qu'il comprend un moyen de transporteur (6 , 7) pour amener les moules (2) en correspondance du moyen de réaction (12) en conséquence d'un déplacement dans la direction de l'axe de rotation (X11) et en ce que le moyen de réaction (12) comporte au moins une extrémité généralement effilée (12a) pointant vers les mornes (2) qui se déplacent vers le moyen de réaction (12).

9. Dispositif selon l'une quelconque des revendications précédentes, caractérisé en ce que le moyen de préhension (17) peut avoir (19) un mouvement général d'éloignement et de rapprochement de l'axe de rotation (X11).

10. Dispositif selon la revendication 9, caractérisé en ce que le moyen de préhension (17) supporte des moyens d'actionnement associés (19, 20, 21) qui peuvent provoquer sélectivement :
- un déplacement du moyen de préhension (17) vers l'axe de rotation (X11) afin d'amener le moyen de préhension (17) en engagement avec l'un des moules (2) devant être retourné autour de l'axe (X11) et de forcer le moule contre le moyen de réaction, et
- un déplacement du moyen de préhension (17) loin de l'axe de rotation (X11) afin de libérer un des moules (2), une fois le mouvement de retournement terminé.

11. Dispositif selon la revendication 10, caractérisé en ce que les moyens d'actionnement (19, 20, 21) comprennent au moins une came (21) qui coopère avec le moyen de préhension (17).

12. Dispositif selon la revendication 11, caractérisé en ce que le moyen de préhension (17) comprend au moins un corps rotatif (20) pour coopérer avec ladite au moins une came (21) et servir généralement de suiveur.

13. Dispositif selon l'une quelconque des revendications précédentes, caractérisé en ce qu'il comprend au moins une structure rotative (11) qui est centrée sur l'axe de rotation (X11) et sur laquelle le moyen de préhension (17) est monté ; la rotation de ladite au moins une structure rotative (11) entraînant le mouvement orbital du moyen de préhension (17) autour de l'axe de rotation (X11).

14. Dispositif selon la revendication 1 ou la revendication 13, caractérisé en ce qu'il comprend un moyen d'entraînement (14) qui peut être actionné sélectivement dans deux sens de rotation afin de donner des mouvements orbitaux dans des sens opposés autour de l'axe de rotation (X11) au moyen de préhension (17) afin de provoquer sélectivement, selon le sens de rotation :
- un mouvement de retournement de fermeture qui amène un moule respectif (2) à recouvrir un moule complémentaire respectif (3); et
- un mouvement de retournement d'ouverture qui amène un moule respectif (2) qui se trouve dans la position de recouvrement sur un moule complémentaire respectif (3) dans une position généralement à côté du moule respectif (3).

15. Dispositif selon la revendication 4 et la revendication 13, caractérisé en ce que le moyen d'entraînement (14) agit sur ladite au moins une structure rotative (11).

16. Dispositif selon la revendication 13 ou la revendication 15, caractérisé en ce que ladite au moins une structure rotative (11) est généralement annulaire.

17. Dispositif selon la revendication 16, caractérisé en ce que la structure rotative annulaire (11) est adaptée à tourner autour de l'axe de rotation (X11) et est supportée en rotation sur une pluralité de corps tournants (13).

18. Dispositif selon la revendication 14 et la revendication 17, caractérisé en ce que le moyen d'entraînement (14) est associé à au moins un des corps tournants (13).

19. Dispositif selon la revendication 11 et la revendication 16, caractérisé en ce que ladite au moins une came (21) est généralement semi-circulaire et s'étend sur environ la moitié de la trajectoire de rotation de ladite au moins une structure rotative annulaire (11) avec des faces inclinées montante et descendante (21a, 21b), respectivement, situées dans des positions diamétralement opposées pour coopérer avec le moyen de préhension (17).

20. Dispositif selon l'une quelconque des revendications précédentes, caractérisé en ce qu'il comprend au moins deux moyens de préhension (17) disposés dans des positions diamétralement opposées le long de la trajectoire orbitale du moyen de préhension (17) autour de l'axe de rotation (X11) ; l'agencement étant tel que, lorsqu'un des moyens de préhension (17) engage un moule respectif (2) afin de déclencher son mouvement de retournement autour de l'axe de rotation (X11), l'autre moyen de préhension (17) libère un autre moule (2) qui a terminé son mouvement de retournement autour de l'axe de rotation (X11).

21. Dispositif selon l'une quelconque des revendications précédentes, caractérisé en ce qu'il comprend au moins deux structures rotatives (11) disposées côte à côte pour entraîner le moyen de préhension (17).

22. Dispositif selon la revendication 14, caractérisé en ce qu'il comprend un premier transporteur (6) et un second transporteur (7) pour transporter les mornes (2, 3), les transporteurs (6, 7) étant destinés, respectivement :
- à acheminer jusqu'au moyen de réaction (12) les moules (2) qui doivent être fermés afin de recouvrir les moules complémentaires respectifs (3), et à recevoir les mornes (2) qui ont été retournés et ouverts depuis des positions initiales dans lesquelles les moules (2) recouvraient les moules complémentaires respectifs (3) jusqu'à des positions généralement à côté d'eux, et
- à transporter les moules complémentaires (3) vers le moyen de réaction (12), à transporter depuis le moyen de réaction (12) des paires de moules (2, 3) qui sont superposés dans un agencement de recouvrement en conséquence du mouvement de retournement de fermeture, et à transporter jusqu'au moyen de réaction (12) des paires de moules (2, 3) qui sont superposés dans un agencement de recouvrement, et dans lesquelles le moule supérieur (2) doit être retourné dans le mouvement d'ouverture.

23. Dispositif selon la revendication 22, caractérisé en ce que le second transporteur (7) se trouve dans une position généralement plus basse que le premier transporteur (6).

24. Dispositif selon la revendication 22 ou la revendication 23, caractérisé en ce que les transporteurs (6, 7) comprennent des formations d'entraînement (8) entraînées par moteur sur lesquelles les moules (2) sont supportés sans contrainte.
